(19) Europäisches Patentamt
European Patent Office
Office européen des brevets

(11) Veröffentlichungsnummer: **0 463 478 B1**

(12) **EUROPÄISCHE PATENTSCHRIFT**

(45) Veröffentlichungstag der Patentschrift: **13.12.95**

(51) Int. Cl.$^6$: **C09B 62/002**

(21) Anmeldenummer: **91109639.4**

(22) Anmeldetag: **12.06.91**

# (54) Reaktivfarbstoffe mit einem Triphendioxazin-Chromophor

(30) Priorität: **27.06.90 DE 4020422**

(43) Veröffentlichungstag der Anmeldung:
**02.01.92 Patentblatt 92/01**

(45) Bekanntmachung des Hinweises auf die Patenterteilung:
**13.12.95 Patentblatt 95/50**

(84) Benannte Vertragsstaaten:
**CH DE FR GB IT LI**

(56) Entgegenhaltungen:
**EP-A- 0 279 122**
**CH-A- 618 998**
**DE-A- 3 045 471**

(73) Patentinhaber: **BASF Aktiengesellschaft**
**Carl-Bosch-Strasse 38**
**D-67063 Ludwigshafen (DE)**

(72) Erfinder: **Patsch, Manfred, Dr.**
**Fritz-Wendel-Strasse 4**
**W-6706 Wachenheim (DE)**
Erfinder: **Marschner, Claus, Dr.**
**Franz-Boegler-Weg 3**
**W-6720 Speyer (DE)**
Erfinder: **Priester, Claus Ulrich, Dr.**
**Ungsteiner Strasse 18**
**W-6700 Ludwigshafen (DE)**

EP 0 463 478 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Triphendioxazinfarbstoffe der Formel I

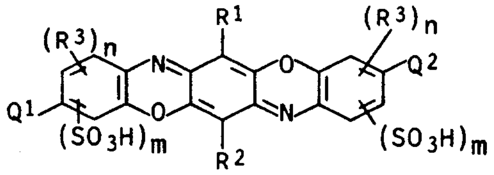

(I),

in der

- n: 0 oder 1,
- m: 1 oder 2,
- $R^1$ und $R^2$: gleich oder verschieden sind und unabhängig voneinander jeweils Wasserstoff, Chlor, Brom, Hydroxysulfonyl, $C_1$-$C_4$-Alkyl, $C_1$-$C_4$-Alkoxy, gegebenenfalls substituiertes Phenyl oder gegebenenfalls substituiertes Phenoxy,
- $R^3$: Halogen, Carboxyl, $C_1$-$C_4$-Alkyl, $C_1$-$C_4$-Alkoxy, Vinylsulfonyl oder den Rest $-SO_2-CH_2CH_2-Z$, wobei Z für eine Austrittsgruppe steht, und
- $Q^1$ und $Q^2$: gleich oder verschieden sind und unabhängig voneinander jeweils einen Rest der Formel

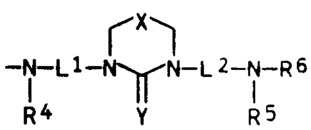

bedeuten, worin

- $R^4$ und $R^5$: gleich oder verschieden sind und unabhängig voneinander jeweils für Wasserstoff, $C_1$-$C_4$-Alkyl oder Phenyl,
- $R^6$: für Wasserstoff oder einen faserreaktiven Rest,
- $L^1$ und $L^2$: gleich oder verschieden sind und unabhängig voneinander jeweils für $C_2$-$C_8$-Alkylen, das gegebenenfalls durch ein oder mehrere Sauerstoffatome in Etherfunktion oder ein oder mehrere Imino-, $C_1$-$C_4$-Alkylimino- oder Acetyliminogruppen unterbrochen ist, oder Phenylen,
- X: für eine chemische Bindung, Sauerstoff, Schwefel, Imino, $C_1$-$C_4$-Alkylimino, Carbonyl oder Methylen und
- Y: für Sauerstoff oder Schwefel stehen,

mit der Maßgabe, daß wenn n 0 ist $R^6$ einen faserreaktiven Rest bedeutet und daß sich die Hydroxysulfonylgruppen jeweils in ortho-Position zu den Substituenten $Q^1$ und $Q^2$ befinden.

Aus der DE-A-2 503 611 sind Reaktivfarbstoffe auf Basis von Triphendioxazinen bekannt. Es hat sich jedoch gezeigt, daß diese Verbindungen noch über anwendungstechnische Nachteile verfügen.

Aufgabe der vorliegenden Erfindung war es, neue Reaktivfarbstoffe mit einem Triphendioxazin-Chromophor bereitzustellen, die vorteilhafte anwendungstechnische Eigenschaften aufweisen.

Demgemäß wurden die eingangs näher bezeichneten Triphendioxazinfarbstoffe der Formel I gefunden.

Alle in der obengenannten Formel I auftretenden Alkyl- und Alkylengruppen können sowohl geradkettig als auch verzweigt sein.

Wenn in der obengenannten Formel I substituierte Phenylgruppen auftreten, können als Substituenten z.B. $C_1$-$C_4$-Alkyl, $C_1$-$C_4$-Alkoxy, Halogen, dabei insbesondere Chlor, Hydroxysulfonyl oder Carboxyl in Betracht kommen.

Wenn die Reste $L^1$ und $L^2$ durch Sauerstoffatome in Etherfunktion oder Imino-, $C_1$-$C_4$-Alkylimino- oder Acetyliminogruppen unterbrochen sind, sind solche Reste bevorzugt, bei denen diese Unterbrechung ein- oder zweimal auftritt.

Wenn $R^3$ den Rest $-SO_2-CH_2CH_2-Z$ bedeutet, steht Z für eine Austrittsgruppe. Geeignete Austrittsgruppen sind insbesondere solche, die unter alkalischen Reaktionsbedingungen abspaltbar sind, z.B. Chlor, $OSO_3H$, $SSO_3H$, $OP(O)(OH)_2$, $C_1$-$C_4$-Alkylsulfonyloxy, gegebenenfalls substituiertes Phenylsulfonyloxy, $C_1$-$C_4$-Alkanoyloxy, $C_1$-$C_4$-Dialkylamino oder ein Rest der Formel

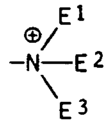 $An^{\ominus}$ , 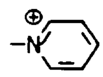 $An^{\ominus}$ , 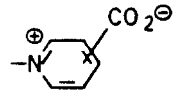 oder 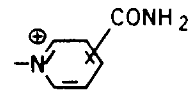 $An^{\ominus}$ ,

wobei $E^1$, $E^2$ und $E^3$ gleich oder verschieden sind und unabhängig voneinander jeweils die Bedeutung von $C_1$-$C_4$-Alkyl oder Benzyl und $An^{\ominus}$ jeweils die Bedeutung eines Anions (z.B. Fluorid, Chlorid, Bromid, Iodid, Mono-, Di- oder Trichloracetat, Methylsulfonat, Phenylsulfonat oder Tolylsulfonat) besitzen.

Reste $R^1$, $R^2$, $R^3$, $R^4$ und $R^5$ sind z.B. Methyl, Ethyl, Propyl, Isopropyl, Butyl, Isobutyl oder sec-Butyl.

Reste $R^1$ und $R^2$ sind weiterhin z.B. Methoxy, Ethoxy, Propoxy, Isopropoxy, Butoxy, Isobutoxy, sec-Butoxy, Phenyl, 2-, 3- oder 4-Methylphenyl, 2-, 3- oder 4-Ethylphenyl, 2-, 3- oder 4-Methoxyphenyl, 2-, 3- oder 4-Chlorphenyl, 2-, 3- oder 4-Hydroxysulfonylphenyl, 2-, 3- oder 4-Carboxyphenyl, Phenoxy, 2-, 3- oder 4-Methylphenoxy, 2-, 3- oder 4-Ethylphenoxy, 2-, 3- oder 4-Methoxyphenoxy, 2-, 3- oder 4-Chlorphenoxy, 2-, 3- oder 4-Hydroxysulfonylphenoxy oder 2-, 3- oder 4-Carboxyphenoxy.

Reste $R^3$ sind weiterhin z.B. Fluor, Chlor, Brom, Methoxy, Ethoxy, Propoxy, Isopropoxy, Butoxy, Isobutoxy oder sec-Butoxy.

Reste $L^1$ und $L^2$ sind z.B. $-(CH_2)_2-$, $-(CH_2)_3-$, $-(CH_2)_4-$, $-(CH_2)_5-$, $-(CH_2)_6-$, $-(CH_2)_7-$, $-(CH_2)_8-$, $-CH_2-CH(CH_3)-$, $-CH(CH_3)-CH(CH)_3-$, $-CH_2-CH(C_2H_5)-$, $-(CH_2)_2-CH(CH_3)-$, $-(CH_2)_2-O-(CH_2)_2-$, $-(CH_2)_2-O-(CH_2)_2-O-(CH_2)_2-$, $-(CH_2)_2-NH-(CH_2)_2-$, $-(CH_2)_2-NH-(CH_2)_2-NH-(CH_2)_2-$, $-(CH_2)_2-NCH_3-(CH)_2-$, $-(CH_2)_2-NCH_3-(CH_2)_2-NCH_3-(CH_2)_2-$ oder $-(CH_2)_2-N(COCH_3)-(CH_2)_2-$.

Faseraktive Reste $R^6$ sind solche, die mit den Hydroxygruppen oder Stickstoff enthaltenden Gruppen der zu behandelnden Substrate substitutiv oder additiv reagieren. Daß der reaktive Rest mit den betreffenden Gruppen in den Substraten, z.B. mit den Hydroxygruppen der Cellulose, substitutiv reagiert, bedeutet, daß die Austrittsgruppen oder -atome (z.B. Fluor oder Chlor) im faserreaktiven Rest $R^6$ durch die Hydroxygruppen der Cellulose gemäß folgendem Schema substituiert werden:

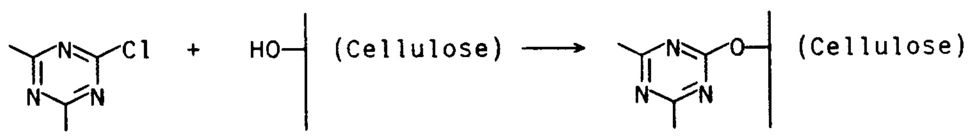


Daß der faserreaktive Rest mit betreffenden Gruppen in den Substraten, z.B. mit den Hydroxygruppen der Cellulose, additiv reagiert, bedeutet, daß die Hydroxygruppen der Cellulose gemäß folgendem Schema an den faserreaktiven Rest addiert werden:

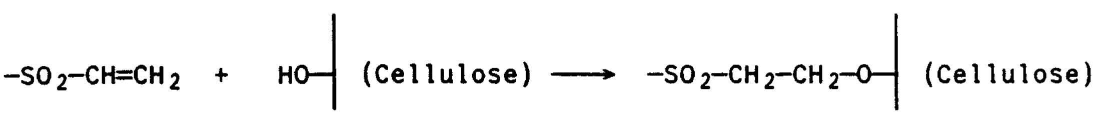


Faserreaktive Reste $R^6$ sind z.B. heterocyclische Reste, wie halogensubstituierte Reste von 1,3,5-Triazin, Chinoxalin, Phthalazin, Pyrimidin oder Pyridazon, oder der 2-Alkylsulfonylbenzthiazolrest, oder Reste aus der aliphatischen Reihe.

Beispielhaft seien folgende heterocyclische Reste genannt:

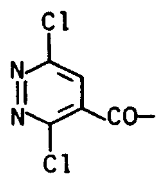 , 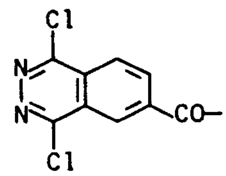 , 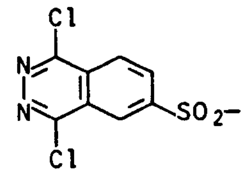 ,

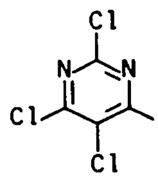 , 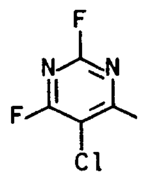 , 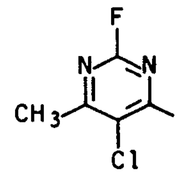 ,

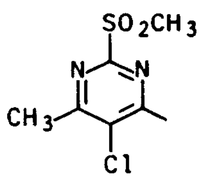 , 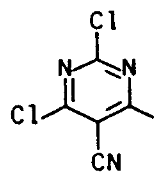 , 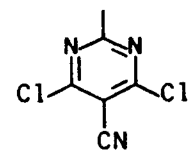 ,

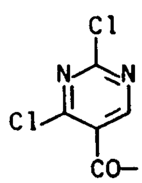 , 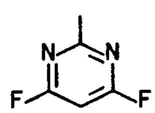 , 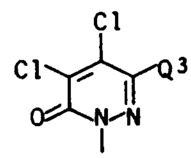 ,

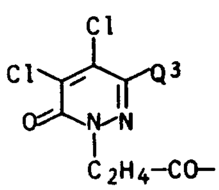 , 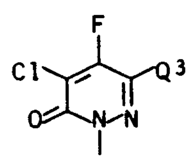 , 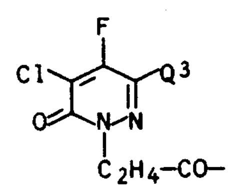 ,

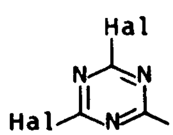 , 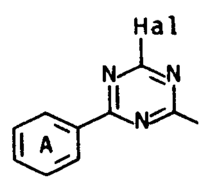 , 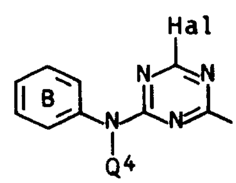 ,

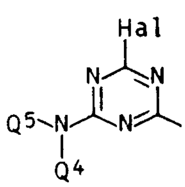 , 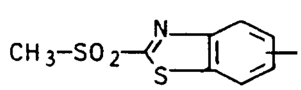 oder 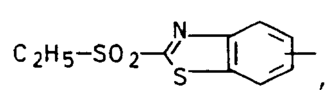 ,

wobei

- Hal für Fluor oder Chlor,
- $Q^3$ für Wasserstoff oder Nitro,
- $Q^4$ für Wasserstoff oder $C_1$-$C_4$-Alkyl, das durch Sulfato- oder Hydroxysulfonyl substituiert sein kann, und
- $Q^5$ für 2-Hydroxysulfonylethyl stehen, und

die Ringe A und B jeweils ein- oder mehrfach durch Hydroxysulfonyl substituiert sein können und der Ring B davon unabhängig ein- oder mehrfach durch Chlor, Nitro, $C_1$-$C_4$-Alkyl, $C_1$-$C_4$-Alkoxy, Cyano, Carboxyl, Acetylamino, oder den Rest $CH_2$-$SO_2$-$CH_2CH_2$-Z, $SO_2$-$CH_2CH_2$-Z oder NH-CO-$CH_2CH_2$-Z, wobei Z jeweils die obengenannte Bedeutung besitzt, substituiert und/oder benzoanelliert sein kann.

Reste aus der aliphatischen Reihe sind beispielsweise Acryloyl-, Mono-, Di- oder Trichloracryloyl, -CO-CCl = CH-COOH, -CO-CH = CCl-COOH, 2-Chlorpropionyl, 3-Phenylsulfonylpropionyl, 3-Methylsulfonylpropionyl, 2-Sulfatoethylaminosulfonyl, Vinylsulfonyl, 2-Chlorethylsulfonyl, 2-Sulfatoethylsulfonyl, 2-Phosphatoethylsulfonyl, 2-Thiosulfatoethylsulfonyl, 2-Methylsulfonylethylsulfonyl, 2-Phenylsulfonylethylsulfonyl, 2-Fluor-2-chlor-3,3-difluorcyclobut-1-yl-carbonyl, 2,2,3,3-Tetrafluorcyclobut-1-yl-carbonyl, 2,2,3,3-Tetrafluorcyclobut-1-ylsulfonyl, 2-(2,2,3,3-Tetrafluorcyclobut-1-yl)acryloyl, 1- oder 2-Bromacryloyl, 1- oder 2-Alkyl- oder -Arylsulfonylacryloyl, wie 1- oder 2-Methylsulfonylacryloyl, 1,2-Dichlorpropionyl oder 1,2-Dibrompropionyl.

Bevorzugt sind Triphendioxazinfarbstoffe der Formel I, in der

| | |
|---|---|
| n | 0 oder 1, |
| m | 1 oder 2, |
| $R^1$ und $R^2$ | unabhängig voneinander Wasserstoff, Chlor, Brom, Hydroxysulfonyl, $C_1$-$C_4$-Alkyl, $C_1$-$C_4$-Alkoxy, Phenyl oder Phenoxy, |
| $R^3$ | Halogen, $C_1$-$C_4$-Alkyl, $C_1$-$C_4$-Alkoxy, Vinylsulfonyl oder den Rest -$SO_2$-$CH_2CH_2$-Z, wobei Z die obengenannte Bedeutung besitzt, |
| $R^4$ und $R^5$ | unabhängig voneinander Wasserstoff, $C_1$-$C_4$-Alkyl oder Phenyl, |
| $R^6$ | Wasserstoff oder einen faserreaktiven Rest auf Basis von halogensubstituiertem 1,3,5-Triazin, Chinoxalin, Phthalazin, Pyrimidin oder Pyridazon, |
| $L^1$ und $L^2$ | unabhängig voneinander $C_2$-$C_8$-Alkylen oder Phenylen, |
| X | eine chemische Bindung, Sauerstoff, Imino oder Methylen und |
| Y | Sauerstoff bedeuten. |

Bevorzugt sind weiterhin Triphendioxazinfarbstoffe der Formel I, in der $L^1$ und $L^2$ unabhängig voneinander $C_2$-$C_8$-Alkylen bedeuten.

Besonders bevorzugt sind Triphendioxazinfarbstoffe der Formel I, in der

| | |
|---|---|
| n | 0 oder 1, |
| m | 1 oder 2, |
| $R^1$ und $R^2$ | unabhängig voneinander Wasserstoff, Chlor oder Hydroxysulfonyl, |
| $R^3$ | Chlor, Brom oder Hydroxysulfonyl, |
| $R^4$ und $R^5$ | unabhängig voneinander Wasserstoff oder $C_1$-$C_4$-Alkyl, |
| $R^6$ | einen faserreaktiven Rest auf Basis von halogensubstituiertem 1,3,5-Triazin, |
| $L^1$ und $L^2$ | unabhängig voneinander $C_2$-$C_6$-Alkylen, |
| X | eine chemische Bindung, Sauerstoff oder Methylen und |
| Y | Sauerstoff bedeuten. |

Besonders bevorzugt sind weiterhin Triphendioxazinfarbstoffe der Formel I, in der $R^6$ einen faserreaktiven Rest aus der Monochlor- oder Monofluortriazinreihe bedeuten.

Insbesondere zu nennen sind Triphendioxazinfarbstoffe der Formel I, in der

| | |
|---|---|
| n | 0, |
| m | 1, |
| $R^1$ und $R^2$ | unabhängig voneinander Wasserstoff oder Chlor, |
| $R^4$ und $R^5$ | unabhängig voneinander Wasserstoff oder $C_1$-$C_4$-Alkyl, |
| $R^6$ | einen faserreaktiven Rest aus der Monochlor- oder Monofluortriazinreihe, |
| $L^1$ und $L^2$ | unabhängig voneinander $C_2$-$C_4$-Alkylen, |
| X | eine chemische Bindung oder Methylen und |
| Y | Sauerstoff bedeuten. |

Die neuen Triphendioxazinfarbstoffe der Formel I können nach an sich bekannten Methoden erhalten werden.

So können diejenigen Triphendioxazinfarbstoffe der Formel I, in der $R^6$ einen faserreaktiven Rest bedeutet, ausgehend von solchen Triphendioxazinfarbstoffen der Formel I, in der $R^6$ Wasserstoff bedeutet, durch Kondensation mit einer Ankerkomponente der Formel II

$R^7$-Hal (II),

in der Hal für Halogen und $R^7$ für einen faserreaktiven Rest stehen erhalten werden.

Die Kondensation kann dabei in der Regel in Abhängigkeit von der verwendeten Ankerkomponente II entweder in wäßrigem oder wäßrig-organischem Medium bei einer Temperatur von 0 bis 80 °C und einem

pH-Wert von 3 bis 9 in Gegenwart alkalischer Kondensationsmittel, wie wäßriger Alkalihydrogencarbonat-, Alkalicarbonat-, Alkalihydroxid-, Alkalihydrogenphosphat-, Dialkalihydrogenphosphat- oder Trialkaliphosphat-Lösung, durchgeführt.

Geeignete organische Lösungsmittel sind z.B. Aceton, Ethanol, Propanol, Isopropanol, Butanol, N-Methylpyrrolidinon oder N,N-Dimethylformamid.

Diejenigen Triphendioxazinfarbstoffe der Formel I, in der $R^6$ Wasserstoff bedeutet, können auf an sich bekanntem Wege aus den Dianiliden der Formel III

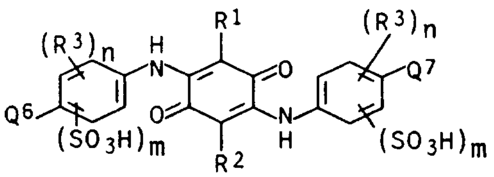

(III),

in der m, n, $R^1$, $R^2$ und $R^3$ jeweils die obengenannte Bedeutung besitzen und $Q^6$ und $Q^7$ gleich oder verschieden sind und unabhängig voneinander jeweils den Rest

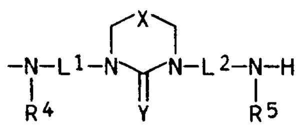

worin $R^4$, $R^5$, $L^1$, $L^2$, X und Y jeweils die obengenannte Bedeutung besitzen, durch Ringschluß unter Verwendung von Kondensationsmitteln, wie Schwefelsäure oder Oleum (DE-A-2 503 611), gegebenenfalls in Gegenwart geeigneter Oxidationsmittel, z.B. Mangandioxid (EP-A-199 056), Natrium-, Kalium- oder Ammoniumperoxodisulfat (GB-A-1 589 915), Chlor, Brom oder anorganische Bromverbindungen (EP-A-296 411), Iod oder anorganische Iodverbindungen (US-A-4 532 323), katalytische Mengen organische Iodverbindungen (EP-A-311 969) oder Natriumperborat oder Natriumpercarbonat (ältere Patentanmeldung EP-A-400 429) hergestellt werden.

Die Herstellung der Dianilide III erfolgt nach an sich bekannter Weise durch Kondensation der Benzochinone der Formel IV

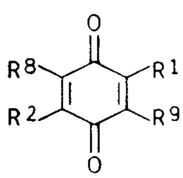

(IV),

in der $R^1$ und $R^2$ jeweils die obengenannte Bedeutung besitzen und $R^8$ und $R^9$ gleich oder verschieden sind und unabhängig voneinander jeweils Chlor, Brom, $C_1$-$C_4$-Alkoxy oder Phenoxy bedeuten, mit Aminen der Formel V

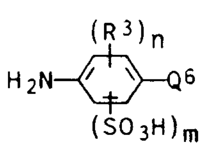

(V),

in der m, n, $R^3$ und $Q^6$ jeweils die obengenannte Bedeutung besitzen.

Die Kondensation der Benzochinone IV mit den Aminen V erfolgt in der Regel in wäßrigem oder wäßrig-organischem Medium unter Zugabe alkalischer Kondensationsmittel bei einem pH-Wert von 3 bis 11, vorzugsweise 4 bis 8, und einer Temperatur von 20 bis 90 °C, vorzugsweise von 40 bis 70 °C, oder in gepufferten Lösungen, die obige alkalische Kondensationsmittel enthalten. Man kann auch in rein organischem Milieu unter Zusatz säurebindender Mittel arbeiten.

Alkalische Kondensationsmittel sind beispielsweise Natriumhydrogencarbonat, Natriumcarbonat, Natrium- oder Kaliumacetat, Natronlauge, Kalilauge, Natriumphosphate oder Natriumborat.

Geeignete organische Lösungsmittel sind beispielsweise die oben bereits genannten.

Eine andere Herstellmöglichkeit besteht in der Addition der Amine V an 1,4-Benzochinone der Formel (VI)

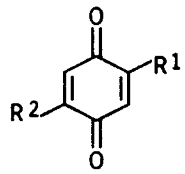

(VI),

worin $R^1$ und $R^2$ jeweils die obengenannte Bedeutung besitzen, und der Oxidation der primär entstehenden Addukte.

Die Amine V wiederum können beispielsweise durch Kondensation der Halogenbenzole der Formel VII

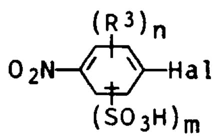

(VII),

in der m, n und $R^3$ jeweils die obengenannte Bedeutung besitzen und Hal für Halogen, dabei insbesondere für Chlor oder Brom, steht, mit den Diaminen der Formel VIII

$Q^6$-H (VIII),

in der $Q^6$ die obengenannte Bedeutung besitzt, und anschließender Reduktion der Nitrogruppe erhalten werden.

Die erfindungsgemäßen Triphendioxazinfarbstoffe der Formel I eignen sich in vorteilhafter Weise zum Färben oder Bedrucken von Hydroxy- oder Amidgruppen aufweisenden Materialien, wie Textilfasern, Fäden oder Geweben aus Wolle, Seide oder synthetischen Polyamid- oder Polyurethanfasern, oder zum waschechten Färben oder Bedrucken von nativer oder regenerierter Cellulose, wobei die Behandlung der Cellulosematerialien zweckmäßig in Gegenwart säurebindender Mittel und gegebenenfalls durch Hitzeeinwirkung nach den für Reaktivfarbstoffen bekannten Verfahren erfolgt.

Die neuen Farbstoffe zeichnen sich durch gute Licht- und Naßechtheiten aus.

Die angegebenen Formeln sind die der freien Säuren. Im allgemeinen fallen die Farbstoffe bei der Herstellung in Form ihrer Salze, insbesondere der Lithium-, Natrium- oder Kaliumsalze an und werden auch in dieser Form verwendet.

Die nicht-reaktiven Farbstoffe finden bevorzugt Verwendung zur Herstellung der Reaktivfarbstoffe.

Die folgenden Beispiele sollen die Erfindung näher erläutern.

Beispiel 1

a) Reaktivfarbstoff

27,4 g der Verbindung der Formel

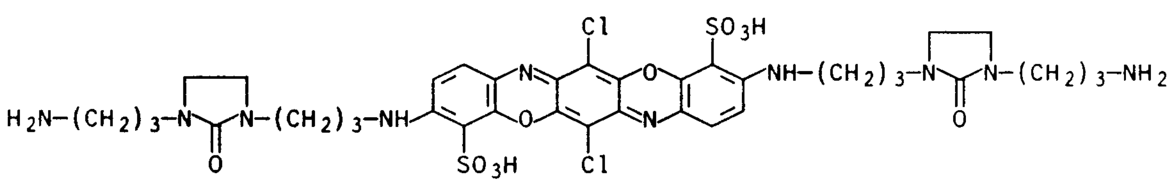

wurden in 1100 ml Wasser eingerührt, wobei mit Natronlauge ein pH-Wert von 10 eingestellt wurde.

Diese Lösung wurde in eine 40 bis 50 °C warme, auf einen pH-Wert von 8 bis 9 gestellte Lösung des Kondensationsprodukts aus 20,0 g Cyanurchlorid und 15,6 g 1-Aminobenzol-3-sulfonsäure getropft. Unter Aufrechterhaltung eines pH-Werts von 8 bis 9 wurde bei 40 bis 50 °C gerührt, bis die Umsetzung beendet war, was etwa 1 Stunde in Anspruch nahm. Nach dem Abkühlen auf Raumtemperatur wurde mit 300 g Kochsalz ausgesalzen, der ausgefallene Farbstoff abgesaugt und unter vermindertem Druck bei 50 bis 60 °C getrocknet. Nach dem Mahlen erhielt man ein blaues Farbstoffpulver, das Baumwolle in brillantem Blauton mit guten Echtheiten färbt ($\lambda_{max}$: 642 nm).

Der Farbstoff entspricht der Formel

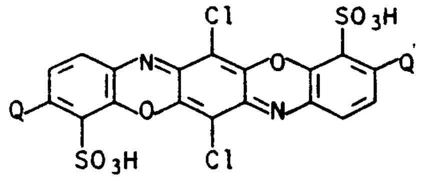

,

in der Q jeweils für den Rest

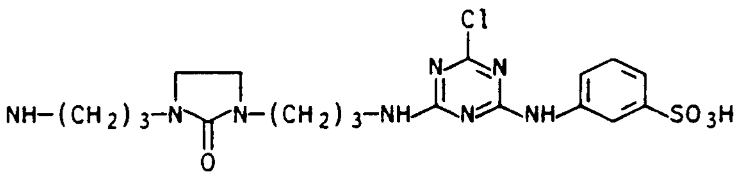

steht.

b) Ausgangsprodukt

237,5 g 5-Nitro-2-chlorbenzolsulfonsäure wurden in 3000 ml Wasser eingerührt, wobei mit 10 gew.-%iger Natronlauge ein pH-Wert von 7 eingestellt wurde. Diese Lösung wurde innerhalb von 90 Minuten in eine 95 °C warme Lösung von 400 g 1,3-Bis(3-aminopropyl)imidazolidin-2-on in 100 ml Wasser getropft. Es wurde bei 95 °C gerührt, bis die Umsetzung beendet war, was etwa 6 Stunden in Anspruch nahm.

Nach dem Abkühlen auf Raumtemperatur wurde mit konz. Salzsäure ein pH-wert von 7 eingestellt und 1 Stunde nachgerührt. Das ausgefallene Produkt wurde abgesaugt, mit kaltem Wasser gewaschen und unter vermindertem Druck bei 50 bis 60 °C getrocknet.

Die gelb gefärbte Verbindung entspricht folgender Struktur

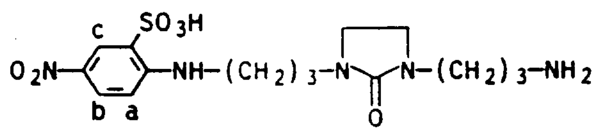

| | |
|---|---|
| $^1$H-NMR (DMSO, δ, ppm): | 1,75 (m, 2 $CH_2$), 2,75 (t, $CH_2$) 3,10 (m, 2 $CH_2$) 3,30 (m, 3 $CH_2$), 6,70 (d, Aromaten-$H^a$),7,40 (brs, NH), 7,60 (brs, $NH_2$), 8,00 (dd, Aromaten-$H^b$), 8,30 (d, Aromaten-$H^c$) |

171,5 g der so erhaltenen Nitroverbindung wurden in 2000 ml Methanol und 500 ml Wasser bei Raumtemperatur mit Wasserstoff in Gegenwart eines Katalysators (Palladium auf Kohle) hydriert. Der Katalysator wurde abfiltriert und das Filtrat zur Trockene eingedampft. Es verblieben 152 g einer gelben Verbindung, die der folgenden Struktur entspricht:

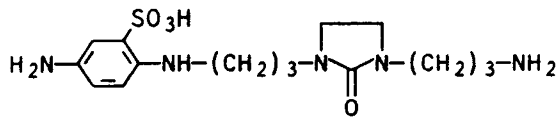

$^1$H-NMR (DMSO, δ, ppm): 1,70 (m, 2 $CH_2$), 2,75 (t, $CH_2$) 3,15 (m, 5 $CH_2$) 3,30 (brs, $NH_2$), 6,30 (brs, Aromaten-H), 6,15 (brs, Aromaten-H), 6,90 (brs, Aromaten-H), 5,0-7,0 (brs, NH, $NH_2$).

143,4 g des erhaltenen Amins wurden in 1800 ml Wasser gelöst, wobei der pH-Wert durch Zugabe von Salzsäure auf 5,5 gestellt wurde. Nach Zugabe von 50,4 g Chloranil wurde unter Aufrechterhaltung eines pH-Werts von 5,5 mit 5 gew.-%iger Natriumhydrogencarbonatlösung auf 90 bis 95 °C erwärmt und 2 Stunden bei dieser Temperatur gerührt, wobei der pH-Wert durch Zutropfen von 5 gew.-%iger Natriumhydrogencarbonatlösung bei 5,5 gehalten wurde. Nach beendeter Kondensation saugte man das dunkelbraune Reaktionsprodukt in der Wärme ab und wusch den Rückstand mit Wasser aus. Das erhaltene Dianilid entspricht der Formel

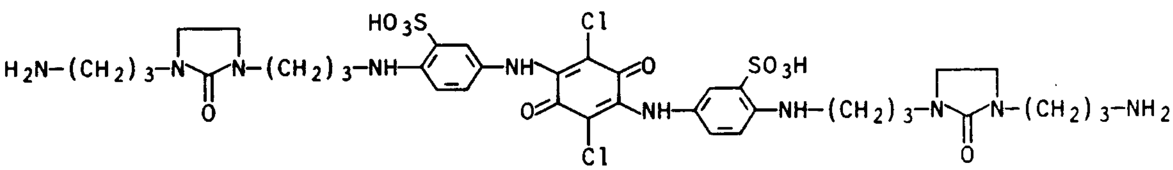

140,2 g dieses Dianilids wurden unter gutem Rühren bei 0 bis 5 °C in ein Gemisch aus 842,6 g 96 gew.-%iger Schwefelsäure und 766 g 24 gew.-%igem Oleum eingetragen. Es wurde 3 Stunden bei 0 bis 5 °C nachgerührt, dann auf 20 bis 25 °C erwärmt. Bei dieser Temperatur wurden 97,9 g Kaliumperoxodisulfat portionsweise zugesetzt. Dann wurde 1 Stunde bei 20 bis 25 °C gerührt und anschließend bei 0 bis 10 °C auf 3060 g Eiswasser ausgetragen. Durch Zugabe von 10 gew.-%iger Natronlauge wurde der pH-Wert auf 7 gestellt, die Paste abgesaugt und mit Wasser gewaschen. Der resultierende Farbstoff entspricht der Formel

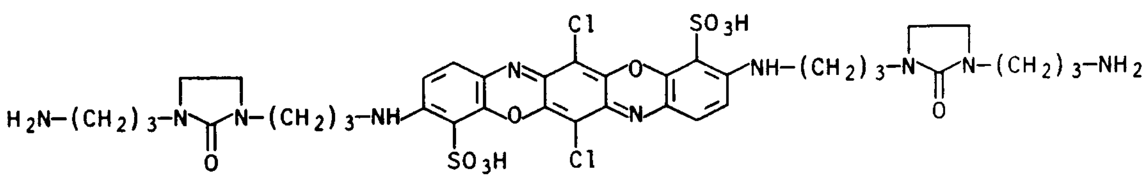

($\lambda_{max}$: 587 nm).

In analoger Weise werden weitere Farbstoffe durch Umsetzung des Triphendioxazins der Formel

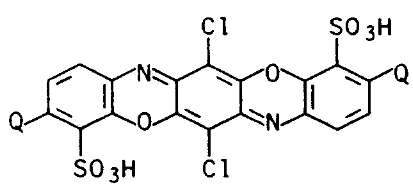

,

worin Q jeweils für den Rest

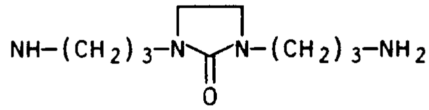

steht, mit dem Reaktionsprodukt von Cyanurchlorid und dem in der folgenden Tabelle Nr. 1 aufgeführten Aminen erhalten.

Tabelle 1

| Beispiel Nr. | Amin |
|---|---|
| 2 | Anilin-2,5-disulfonsäure |
| 3 | Anilin-2,4-disulfonsäure |
| 4 | m-Sulfanilsäure |
| 5 | p-Sulfanilsäure |
| 6 | 2-Aminotoluol-5-sulfonsäure |
| 7 | 2-Aminotoluol-4-sulfonsäure |
| 8 | 2-Aminoanisol-5-sulfonsäure |
| 9 | 2-Aminoanisol-4-sulfonsäure |
| 10 | 4-Aminoanisol-4-sulfonsäure |
| 11 | 4-Aminoanisol-2-sulfonsäure |
| 12 | 2-Amino-1-chlorbenzol-4-sulfonsäure |
| 13 | 2-Amino-1-chlorbenzol-5-sulfonsäure |
| 14 | 2-Aminonaphthalin-1,5-disulfonsäure |
| 15 | 1-Aminonaphthalin-4,7-disulfonsäure |
| 16 | 4-Aminoanisol-2,5-disulfonsäure |
| 17 | 4-Aminotoluol-2,5-disulfonsäure |
| 18 | 2-Aminoethansulfonsäure |
| 19 | Amidosulfonsäure |
| 20 | N-Ethylanilin-3-sulfonsäure |
| 21 | N-(2-Sulfatoethyl)anilin |
| 22 | N-Methylanilin-3-sulfonsäure |
| 23 | 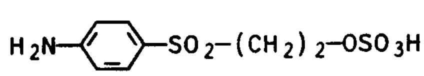 |
| 24 | 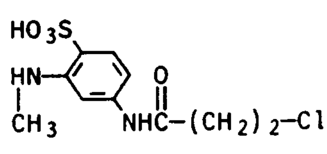 |
| 25 | 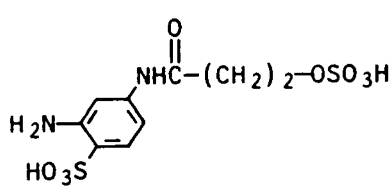 |

Tabelle 1 (Fortsetzung)

| Beispiel Nr. | Amin |
|---|---|
| 26 | 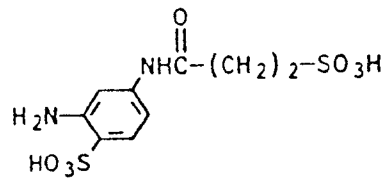 |
| 27 | 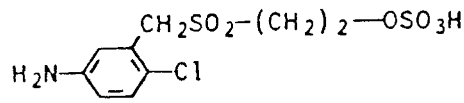 |
| 28 | 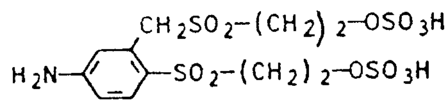 |
| 29 | 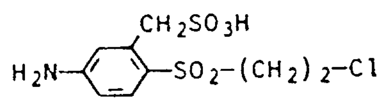 |
| 30 | 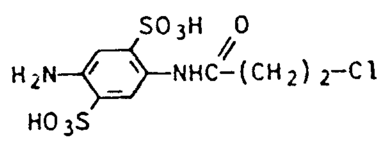 |
| 31 | 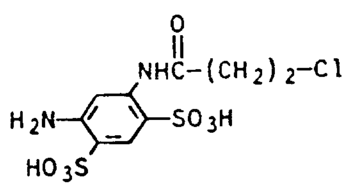 |

Farbstoffe mit ähnlich günstigen Eigenschaften werden erhalten, wenn man analog Beispiel 1 die in der folgenden Tabelle 2 genannten Farbstoffe (A) bis (E) mit dem Reaktionsprodukt von Cyanurchlorid und den in den Beispielen 1 bis 31 aufgeführten Aminen umsetzt. Die Farbstoffe sind in Tabelle 3 aufgeführt.

Tabelle 2

Farbstoff

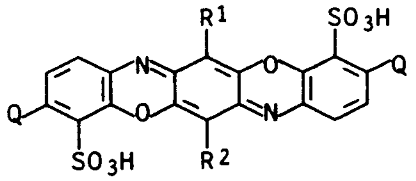

| Farbstoff | $R^1$ | $R^2$ | Q |
|---|---|---|---|
| A | Cl | Cl | 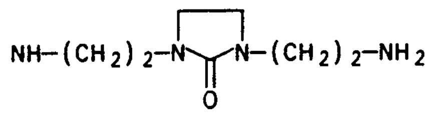 |
| B | Cl | Cl | 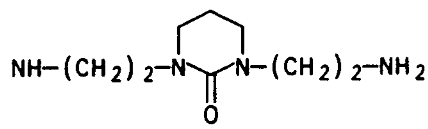 |
| C | Br | Br | 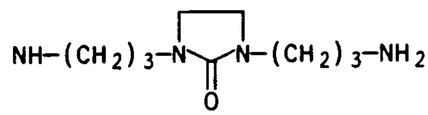 |
| D | $CH_3$ | $CH_3$ | 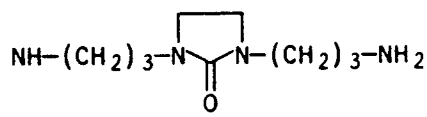 |
| E | $OCH_3$ | $OCH_3$ | 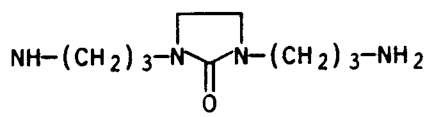 |

Tabelle 3

| Beispiel Nr. | Amin | Farbstoff |
|---|---|---|
| 32 | Aminobenzol-3-sulfonsäure | A |
| 33 | Anilin-2,5-disulfonsäure | A |
| 34 | Anilin-2,4-disulfonsäure | A |
| 35 | m-Sulfanilsäure | A |
| 36 | p-Sulfanilsäure | A |
| 37 | 2-Aminotoluol-5-sulfonsäure | A |
| 38 | 2-Aminotoluol-4-sulfonsäure | A |
| 39 | 2-Aminoanisol-5-sulfonsäure | A |
| 40 | 2-Aminoanisol-4-sulfonsäure | A |
| 41 | 4-Aminoanisol-3-sulfonsäure | A |
| 42 | 4-Aminoanisol-2-sulfonsäure | A |
| 43 | 2-Amino-1-chlorbenzol-4-sulfonsäure | A |
| 44 | 2-Amino-1-chlorbenzol-5-sulfonsäure | A |
| 45 | 2-Aminonaphthalin-1,5-disulfonsäure | A |
| 46 | 1-Aminonaphthalin-4,7-disulfonsäure | A |
| 47 | 4-Aminoanisol-2,5-disulfonsäure | A |
| 48 | 4-Aminotoluol-2,5-disulfonsäure | A |
| 49 | 2-Aminoethansulfonsäure | A |
| 50 | Amidosulfonsäure | A |
| 51 | N-Ethylanilin-3-sulfonsäure | A |
| 52 | N-(2-Sulfatoethyl)anilin | A |
| 53 | N-Methylanilin-3-sulfonsäure | A |
| 54 | 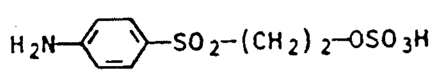 | A |
| 55 | 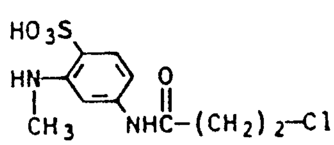 | A |

Tabelle 3 (Fortsetzung)

| Beispiel Nr. | Amin | Farbstoff |
|---|---|---|
| 56 | 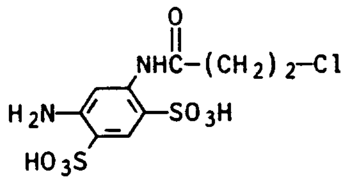 | A |
| 57 | 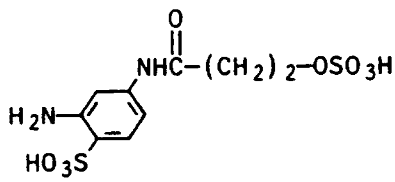 | A |
| 58 | 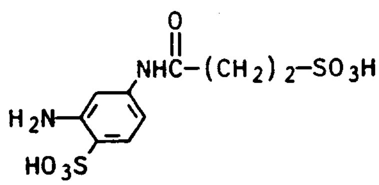 | A |
| 59 | 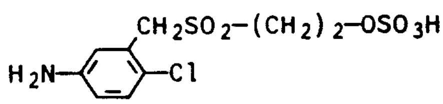 | A |
| 60 | 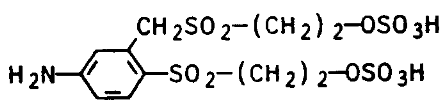 | A |
| 61 | 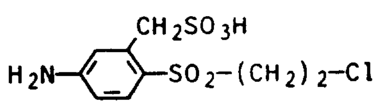 | A |
| 62 | 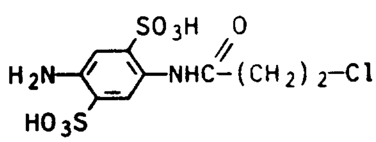 | A |

Tabelle 3 (Fortsetzung)

| Beispiel Nr. | Amin | Farbstoff |
|---|---|---|
| 63 | Aminobenzol-3-sulfonsäure | B |
| 64 | Anilin-2,5-disulfonsäure | B |
| 65 | Anilin-2,4-disulfonsäure | B |
| 66 | m-Sulfanilsäure | B |
| 67 | p-Sulfanilsäure | B |
| 68 | 2-Aminotoluol-5-sulfonsäure | B |
| 69 | 2-Aminotoluol-4-sulfonsäure | B |
| 70 | 2-Aminoanisol-5-sulfonsäure | B |
| 71 | 2-Aminoanisol-4-sulfonsäure | B |
| 72 | 4-Aminoanisol-3-sulfonsäure | B |
| 73 | 4-Aminoanisol-2-sulfonsäure | B |
| 74 | 2-Amino-1-chlorbenzol-4-sulfonsäure | B |
| 75 | 2-Amino-1-chlorbenzol-5-sulfonsäure | B |
| 76 | 2-Aminonaphthalin-1,5-disulfonsäure | B |
| 77 | 1-Aminonaphthalin-4,7-disulfonsäure | B |
| 78 | 4-Aminoanisol-2,5-disulfonsäure | B |
| 79 | 4-Aminotoluol-2,5-disulfonsäure | B |
| 80 | 2-Aminoethansulfonsäure | B |
| 81 | Amidosulfonsäure | B |
| 82 | N-Ethylanilin-3-sulfonsäure | B |
| 83 | N-(2-Sulfatoethyl)anilin | B |
| 84 | N-Methylanilin-3-sulfonsäure | B |
| 85 | 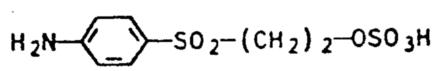 | B |
| 86 | 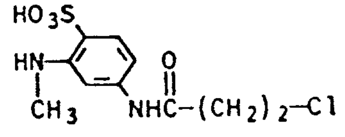 | B |

Tabelle 3 (Fortsetzung)

| Beispiel Nr. | Amin | Farbstoff |
|---|---|---|
| 87 | 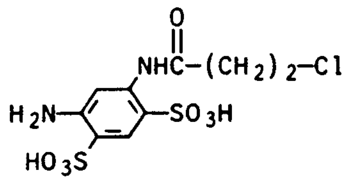 | B |
| 88 | 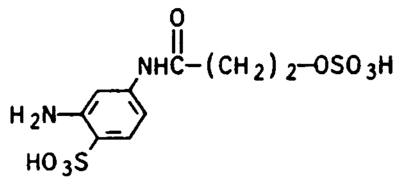 | B |
| 89 | 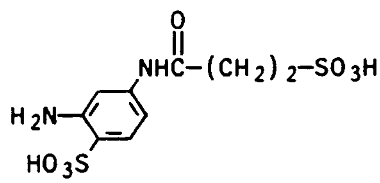 | B |
| 90 | 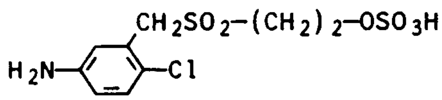 | B |
| 91 | 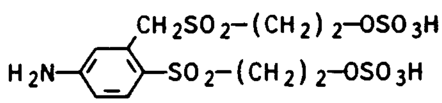 | B |
| 92 | 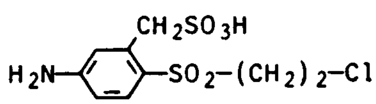 | B |
| 93 | 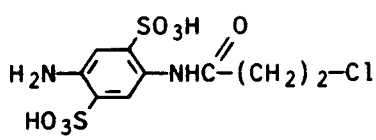 | B |

Tabelle 3 (Fortsetzung)

| Beispiel Nr. | Amin | Farbstoff |
|---|---|---|
| 94 | Aminobenzol-3-sulfonsäure | C |
| 95 | Anilin-2,5-disulfonsäure | C |
| 96 | Anilin-2,4-disulfonsäure | C |
| 97 | m-Sulfanilsäure | C |
| 98 | p-Sulfanilsäure | C |
| 99 | 2-Aminotoluol-5-sulfonsäure | C |
| 100 | 2-Aminotoluol-4-sulfonsäure | C |
| 101 | 2-Aminoanisol-5-sulfonsäure | C |
| 102 | 2-Aminoanisol-4-sulfonsäure | C |
| 103 | 4-Aminoanisol-3-sulfonsäure | C |
| 104 | 4-Aminoanisol-2-sulfonsäure | C |
| 105 | 2-Amino-1-chlorbenzol-4-sulfonsäure | C |
| 106 | 2-Amino-1-chlorbenzol-5-sulfonsäure | C |
| 107 | 2-Aminonaphthalin-1,5-disulfonsäure | C |
| 108 | 1-Aminonaphthalin-4,7-disulfonsäure | C |
| 109 | 4-Aminoanisol-2,5-disulfonsäure | C |
| 110 | 4-Aminotoluol-2,5-disulfonsäure | C |
| 111 | 2-Aminoethansulfonsäure | C |
| 112 | Amidosulfonsäure | C |
| 113 | N-Ethylanilin-3-sulfonsäure | C |
| 114 | N-(2-Sulfatoethyl)anilin | C |
| 115 | N-Methylanilin-3-sulfonsäure | C |
| 116 | 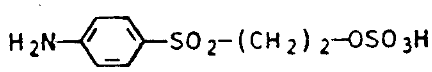 | C |
| 117 | 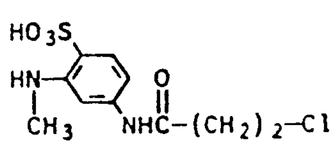 | C |

Tabelle 3 (Fortsetzung)

| Beispiel Nr. | Amin | Farbstoff |
|---|---|---|
| 118 | 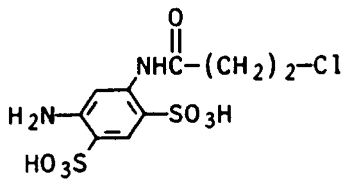 | C |
| 119 | 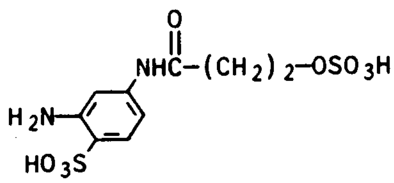 | C |
| 120 | 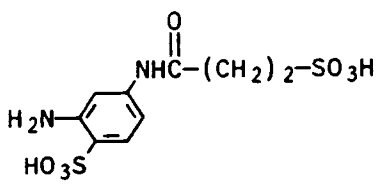 | C |
| 121 | 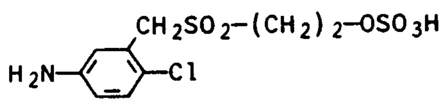 | C |
| 122 | 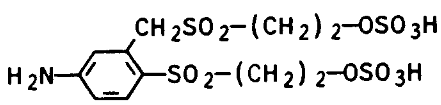 | C |
| 123 | 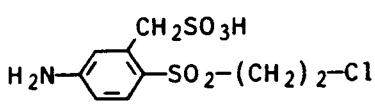 | C |
| 124 | 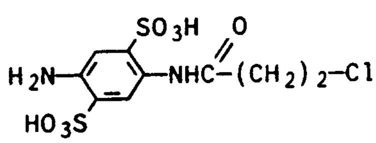 | C |

Tabelle 3 (Fortsetzung)

| Beispiel Nr. | Amin | Farbstoff |
|---|---|---|
| 125 | Aminobenzol-3-sulfonsäure | D |
| 126 | Anilin-2,5-disulfonsäure | D |
| 127 | Anilin-2,4-disulfonsäure | D |
| 128 | m-Sulfanilsäure | D |
| 129 | p-Sulfanilsäure | D |
| 130 | 2-Aminotoluol-5-sulfonsäure | D |
| 131 | 2-Aminotoluol-4-sulfonsäure | D |
| 132 | 2-Aminoanisol-5-sulfonsäure | D |
| 133 | 2-Aminoanisol-4-sulfonsäure | D |
| 134 | 4-Aminoanisol-3-sulfonsäure | D |
| 135 | 4-Aminoanisol-2-sulfonsäure | D |
| 136 | 2-Amino-1-chlorbenzol-4-sulfonsäure | D |
| 137 | 2-Amino-1-chlorbenzol-5-sulfonsäure | D |
| 138 | 2-Aminonaphthalin-1,5-disulfonsäure | D |
| 139 | 1-Aminonaphthalin-4,7-disulfonsäure | D |
| 140 | 4-Aminoanisol-2,5-disulfonsäure | D |
| 141 | 4-Aminotoluol-2,5-disulfonsäure | D |
| 142 | 2-Aminoethansulfonsäure | D |
| 143 | Amidosulfonsäure | D |
| 144 | N-Ethylanilin-3-sulfonsäure | D |
| 145 | N-(2-Sulfatoethyl)anilin | D |
| 146 | N-Methylanilin-3-sulfonsäure | D |
| 147 | 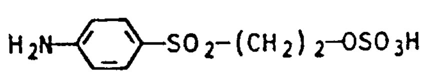 | D |
| 148 | 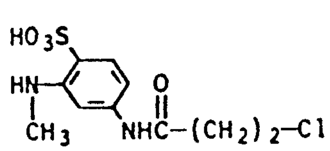 | D |

Tabelle 3 (Fortsetzung)

| Beispiel Nr. | Amin | Farbstoff |
|---|---|---|
| 149 | 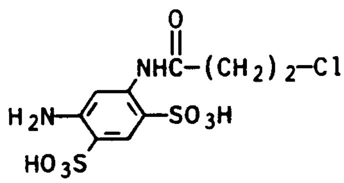 | D |
| 150 | 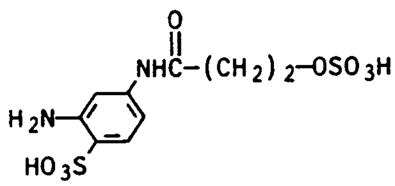 | D |
| 151 | 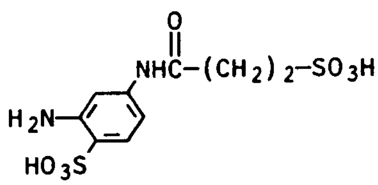 | D |
| 152 | 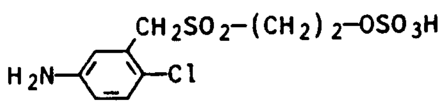 | D |
| 153 | 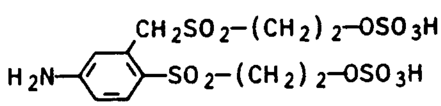 | D |
| 154 | 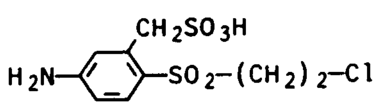 | D |
| 155 | 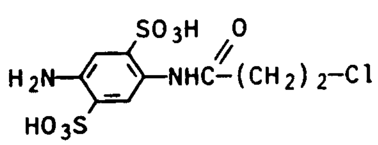 | D |

Tabelle 3 (Fortsetzung)

| Beispiel Nr. | Amin | Farbstoff |
|---|---|---|
| 156 | Aminobenzol-3-sulfonsäure | E |
| 157 | Anilin-2,5-disulfonsäure | E |
| 158 | Anilin-2,4-disulfonsäure | E |
| 159 | m-Sulfanilsäure | E |
| 160 | p-Sulfanilsäure | E |
| 161 | 2-Aminotoluol-5-sulfonsäure | E |
| 162 | 2-Aminotoluol-4-sulfonsäure | E |
| 163 | 2-Aminoanisol-5-sulfonsäure | E |
| 164 | 2-Aminoanisol-4-sulfonsäure | E |
| 165 | 4-Aminoanisol-3-sulfonsäure | E |
| 166 | 4-Aminoanisol-2-sulfonsäure | E |
| 167 | 2-Amino-1-chlorbenzol-4-sulfonsäure | E |
| 168 | 2-Amino-1-chlorbenzol-5-sulfonsäure | E |
| 169 | 2-Aminonaphthalin-1,5-disulfonsäure | E |
| 170 | 1-Aminonaphthalin-4,7-disulfonsäure | E |
| 171 | 4-Aminoanisol-2,5-disulfonsäure | E |
| 172 | 4-Aminotoluol-2,5-disulfonsäure | E |
| 173 | 2-Aminoethansulfonsäure | E |
| 174 | Amidosulfonsäure | E |
| 175 | N-Ethylanilin-3-sulfonsäure | E |
| 176 | N-(2-Sulfatoethyl)anilin | E |
| 177 | N-Methylanilin-3-sulfonsäure | E |
| 178 | 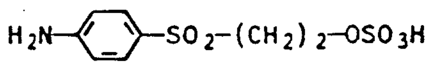 | E |
| 179 | 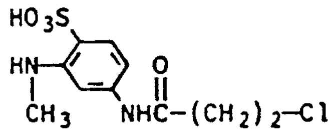 | E |

Tabelle 3 (Fortsetzung)

| Beispiel Nr. | Amin | Farbstoff |
|---|---|---|
| 180 | 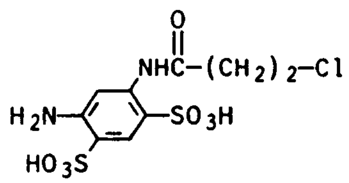 | E |
| 181 | 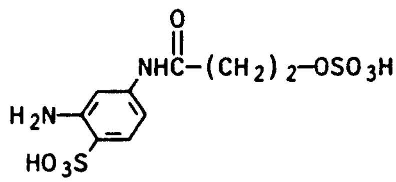 | E |
| 182 | 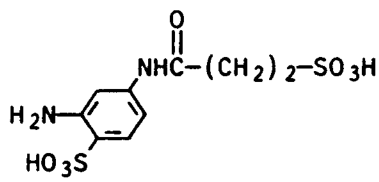 | E |
| 183 | 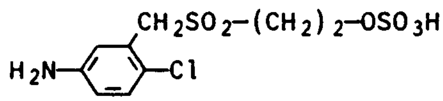 | E |
| 184 | 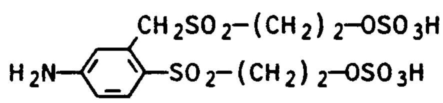 | E |
| 185 | 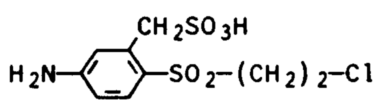 | E |
| 186 | 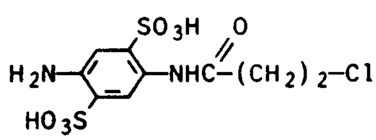 | E |

## Patentansprüche

**1.** Triphendioxazinfarbstoffe der Formel I

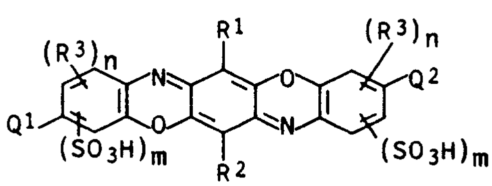

(I),

in der

| | |
|---|---|
| n | 0 oder 1, |
| m | 1 oder 2, |
| $R^1$ und $R^2$ | gleich oder verschieden sind und unabhängig voneinander jeweils Wasserstoff, Chlor, Brom, Hydroxysulfonyl, $C_1$-$C_4$-Alkyl, $C_1$-$C_4$-Alkoxy, gegebenenfalls substituiertes Phenyl oder gegebenenfalls substituiertes Phenoxy, |
| $R^3$ | Halogen, Carboxyl, $C_1$-$C_4$-Alkyl, $C_1$-$C_4$-Alkoxy, Vinylsulfonyl oder den Rest $-SO_2-CH_2CH_2-Z$, wobei Z für eine Austrittsgruppe steht, und |
| $Q^1$ und $Q^2$ | gleich oder verschieden sind und unabhängig voneinander jeweils einen Rest der Formel |

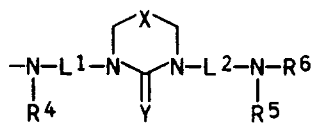

bedeuten, worin

| | |
|---|---|
| $R^4$ und $R^5$ | gleich oder verschieden sind und unabhängig voneinander jeweils für Wasserstoff, $C_1$-$C_4$-Alkyl oder Phenyl, |
| $R^6$ | für Wasserstoff oder einen faserreaktiven Rest, |
| $L^1$ und $L^2$ | gleich oder verschieden sind und unabhängig voneinander jeweils für $C_2$-$C_8$-Alkylen, das gegebenenfalls durch ein oder mehrere Sauerstoffatome in Etherfunktion oder ein oder mehrere Imino-, $C_1$-$C_4$-Alkylimino- oder Acetyliminogruppen unterbrochen ist, oder Phenylen, |
| X | für eine chemische Bindung, Sauerstoff, Schwefel, Imino, $C_1$-$C_4$-Alkylimino, Carbonyl oder Methylen und |
| Y | für Sauerstoff oder Schwefel stehen, |

mit der Maßgabe, daß wenn n 0 ist $R^6$ einen faserreaktiven Rest bedeutet und daß sich die Hydroxysulfonylgruppen jeweils in ortho-Position zu den Substituenten $Q^1$ und $Q^2$ befinden.

**2.** Triphendioxazinfarbstoffe nach Anspruch 1, dadurch gekennzeichnet, daß

| | |
|---|---|
| n | 0 oder 1, |
| m | 1 oder 2, |
| $R^1$ und $R^2$ | unabhängig voneinander Wasserstoff, Chlor, Brom, Hydroxysulfonyl, $C_1$-$C_4$-Alkyl, $C_1$-$C_4$-Alkoxy, Phenyl oder Phenoxy, |
| $R^3$ | Halogen, $C_1$-$C_4$-Alkyl, $C_1$-$C_4$-Alkoxy, Vinylsulfonyl oder den Rest $-SO_2-CH_2CH_2-Z$, wobei Z die in Anspruch 1 genannte Bedeutung besitzt, |
| $R^4$ und $R^5$ | unabhängig voneinander Wasserstoff, $C_1$-$C_4$-Alkyl oder Phenyl, |
| $R^6$ | Wasserstoff oder einen faserreaktiven Rest auf Basis von halogensubstituiertem 1,3,5-Triazin, Chinoxalin, Phthalazin, Pyrimidin oder Pyridazon, |
| $L^1$ und $L^2$ | unabhängig voneinander $C_2$-$C_8$-Alkylen oder Phenylen, |
| X | eine chemische Bindung, Sauerstoff, Imino oder Methylen und |
| Y | Sauerstoff bedeuten. |

**3.** Triphendioxazinfarbstoffe nach Anspruch 1, dadurch gekennzeichnet, daß

| | |
|---|---|
| n | 0 oder 1, |
| m | 1 oder 2, |
| $R^1$ und $R^2$ | unabhängig voneinander Wasserstoff, Chlor oder Hydroxysulfonyl, |
| $R^3$ | Chlor, Brom oder Hydroxysulfonyl, |
| $R^4$ und $R^5$ | unabhängig voneinander Wasserstoff oder $C_1$-$C_4$-Alkyl, |
| $R^6$ | einen faserreaktiven Rest auf Basis von halogensubstituiertem 1,3,5-Triazin, |
| $L^1$ und $L^2$ | unabhängig voneinander $C_2$-$C_6$-Alkylen, |
| X | eine chemische Bindung, Sauerstoff oder Methylen und |
| Y | Sauerstoff bedeuten. |

**4.** Verwendung von Triphendioxazinfarbstoffe gemäß Anspruch 1 zum Färben oder Bedrucken von Hydroxy- oder Amidgruppen aufweisenden Materialien.

## Claims

**1.** A triphendioxazine dye of the formula I

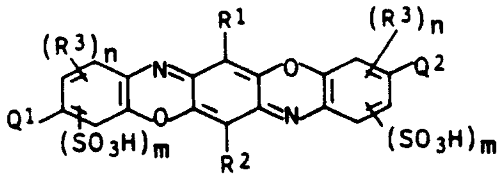

(I),

where

| | |
|---|---|
| n | is 0 or 1, |
| m | is 1 or 2, |
| $R^1$ and $R^2$ | are identical or different and each is independently of the other hydrogen, chlorine, bromine, hydroxysulfonyl, $C_1$-$C_4$-alkyl, $C_1$-$C_4$-alkoxy, substituted or unsubstituted phenyl or substituted or unsubstituted phenoxy, |
| $R^3$ | is halogen, carboxyl, $C_1$-$C_4$-alkyl, $C_1$-$C_4$-alkoxy, vinylsulfonyl or the radical $-SO_2-CH_2CH_2-Z$, where Z is a leaving group, and |
| $Q^1$ and $Q^2$ | are identical or different and each is independently of the other a radical of the formula |

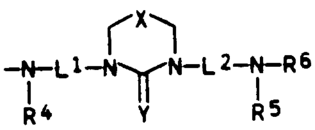

where

| | |
|---|---|
| $R^4$ and $R^5$ | are identical or different and each is independently of the other hydrogen, $C_1$-$C_4$-alkyl or phenyl, |
| $R^6$ | is hydrogen or a fiber-reactive radical, |
| $L^1$ and $L^2$ | are identical or different and each is independently of the other $C_2$-$C_8$-alkylene, which may be interrupted by one or more oxygen atoms in ether function or by one or more imino, $C_1$-$C_4$-alkylimino or acetylimino groups, or is phenylene, |
| X | is a chemical bond, oxygen, sulfur, imino, $C_1$-$C_4$-alkylimino, carbonyl or methylene, and |
| Y | is oxygen or sulfur, |

with the proviso that if n is 0, $R^6$ is a fiber-reactive radical, and that the hydroxysulfonyl groups are each ortho to the substituents $Q^1$ and $Q^2$.

**2.** A triphendioxazine dye as claimed in claim 1, wherein

| | |
|---|---|
| n | is 0 or 1, |
| m | is 1 or 2, |
| $R^1$ and $R^2$ | are each independently of the other hydrogen, chlorine, bromine, hydroxysulfonyl, $C_1$-$C_4$-alkyl, $C_1$-$C_4$-alkoxy, phenyl or phenoxy, |
| $R^3$ | is halogen, $C_1$-$C_4$-alkyl, $C_1$-$C_4$-alkoxy, vinylsulfonyl or the radical $-SO_2-CH_2CH_2-Z$, where Z is as defined in claim 1, |
| $R^4$ | and $R^5$ are each independently of the other hydrogen, $C_1$-$C_4$-alkyl or phenyl, |
| $R^6$ | is hydrogen or a fiber-reactive radical based on halogen-substituted 1,3,5-triazine, quinoxaline, phthalazine, pyrimidine or pyridazone, |
| $L^1$ and $L^2$ | are each independently of the other $C_2$-$C_8$-alkylene or phenylene, |
| X | is a chemical bond, oxygen, imino or methylene, and |
| Y | is oxygen. |

**3.** A triphendioxazine dye as claimed in claim 1, wherein

| | |
|---|---|
| n | is 0 or 1, |
| m | is 1 or 2, |
| $R^1$ and $R^2$ | are each independently of the other hydrogen, chlorine or hydroxysulfonyl, |
| $R^3$ | is chlorine, bromine or hydroxysulfonyl, |
| $R^4$ and $R^5$ | are each independently of the other hydrogen or $C_1$-$C_4$-alkyl, |
| $R^6$ | is a fiber-reactive radical based on halogen-substituted 1,3,5-triazine |
| $L^1$ and $L^2$ | are each independently of the other $C_2$-$C_6$-alkylene, |
| X | is a chemical bond, oxygen or methylene, and |
| Y | is oxygen. |

**4.** The use of a triphendioxazine dye as claimed in claim 1 for dyeing or printing a hydroxyl- or amido-containing material.

## Revendications

**1.** Colorants de la famille de la triphénodioxazine de formule I

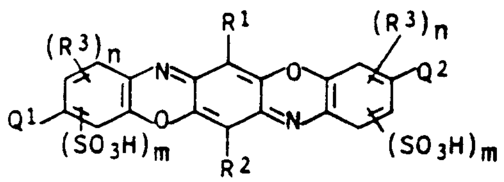

(I),

dans laquelle

| | |
|---|---|
| n | est mis pour 0 ou 1, |
| m | est mis pour 1 ou 2, |
| $R^1$ et $R^2$ | sont identiques ou différents et représentent chacun, indépendamment l'un de l'autre, un atome d'hydrogène, de chlore, de brome ou un groupement hydroxysulfonyle, alkyle en $C_1$-$C_4$, alcoxy en $C_1$-$C_4$, phényle éventuellement substitué ou phénoxy éventuellement substitué, |
| $R^3$ | représente un atome d'halogène ou un groupement carboxyle, alkyle en $C_1$-$C_4$, alcoxy en $C_1$-$C_4$, vinylsulfonyle ou le reste $-SO_2-CH_2CH_2-Z$, Z étant mis pour un groupement enlevable, et |
| $Q^1$ et $Q^2$ | sont identiques ou différents et représentent chacun, indépendamment l'un de l'autre, un reste de formule |

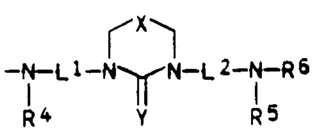

dans laquelle

| | |
|---|---|
| $R^4$ et $R^5$ | sont identiques ou différents et sont mis chacun, indépendamment l'un de l'autre, pour un atome d'hydrogène ou pour un groupement alkyle en $C_1$-$C_4$ ou phényle, |
| $R^6$ | est mis pour un atome d'hydrogène ou pour un reste réactif sur les fibres, |
| $L^1$ et $L^2$ | sont identiques ou différents et sont mis chacun, indépendamment l'un de l'autre, pour un groupement alkylène en $C_2$-$C_8$ qui est éventuellement interrompu par un ou plusieurs atomes d'oxygène en fonction éther ou par un ou plusieurs groupements imino, alkylimino en $C_1$-$C_4$ ou acétylimino, ou pour un groupement phénylène, |
| X | est mis pour une liaison chimique, pour un atome d'oxygène, de soufre ou pour un groupement imino, alkylimino en $C_1$-$C_4$, carbonyle ou méthylène, et |
| Y | est mis pour un atome d'oxygène ou de soufre, |

étant spécifié que quand n est mis pour 0, $R^6$ représente un reste réactif sur les fibres et que les groupements hydroxysulfonyle se trouvent chacun en position ortho par rapport aux substituants $Q^1$ et

$Q^2$.

**2.** Colorants de la famille de la triphénodioxazine selon la revendication 1, caractérisés en ce que

| | |
|---|---|
| n | est mis pour 0 ou 1, |
| m | est mis pour 1 ou 2, |
| $R^1$ et $R^2$ | representent chacun, indépendamment l'un de l'autre, un atome d'hydrogène, de chlore, de brome ou un groupement hydroxysulfonyle, alkyle en $C_1$-$C_4$, alcoxy en $C_1$-$C_4$, phényle ou phénoxy, |
| $R^3$ | représente un atome d'halogène ou un groupement alkyle en $C_1$-$C_4$, alcoxy en $C_1$-$C_4$, vinylsulfonyle ou le reste $-SO_2-CH_2CH_2-Z$, Z ayant la signification donnée dans la revendication 1, |
| $R^4$ et $R^5$ | représentent chacun, indépendamment l'un de l'autre, un atome d'hydrogène ou un groupement alkyle en $C_1$-$C_4$ ou phényle, |
| $R^6$ | représente un atome d'hydrogène ou un reste réactif sur les fibres à base de 1,3,5-triazine halogéno-substituée, de quinoxaline, de phtalazine, de pyrimidine ou de pyridazone, |
| $L^1$ et $L^2$ | représentent chacun, indépendamment l'un de l'autre, un reste alkylène en $C_2$-$C_8$ ou phénylène, |
| X | représente une liaison chimique, un atome d'oxygène ou un groupement imino ou méthylène, et |
| Y | représente un atome d'oxygène. |

**3.** Colorants de la famille de la triphénodioxazine selon la revendication 1, caractérisés en ce que

| | |
|---|---|
| n | est mis pour 0 ou 1, |
| m | est mis pour 1 ou 2, |
| $R^1$ et $R^2$ | représentent chacun, indépendamment l'un de l'autre, un atome d'hydrogène, de chlore ou un groupement hydroxysulfonyle, |
| $R^3$ | représente un atome de chlore, de brome ou un groupement hydroxysulfonyle, |
| $R^4$ et $R^5$ | représentent chacun, indépendamment l'un de l'autre, un atome d'hydrogène ou un groupement alkyle en $C_1$-$C_4$, |
| $R^6$ | représente un reste réactif sur les fibres à base de 1,3,5-triazine halogeno-substituée, |
| $L^1$ et $L^2$ | représentent chacun, indépendamment l'un de l'autre, un reste alkylène en $C_2$-$C_6$, |
| X | représente une liaison chimique, un atome d'oxygène ou un groupement méthylène, et |
| Y | représente un atome d'oxygène. |

**4.** Utilisation de colorants de la famille de la triphénodioxazine selon la revendication 1 pour la teinture ou l'impression de matières comportant des groupements hydroxy ou amide.